# EUROPEAN PATENT APPLICATION

(11) **EP 2 434 317 A1**
(43) Date of publication of application: **28.03.2012**
(21) Application number: 09844891.3
(22) Date of filing: 19.05.2009
(51) Int. Cl.: G02B 6/00, G02B 6/36

(54) **SPLITTER MODULE**

(71) Applicant: Sumitomo Electric Industries, Ltd., Chuo-ku Osaka-shi Osaka 541-0041 (JP)
(72) Inventor: OHTSUKA Kenichiro, Yokohama-shi Kanagawa 244-8588 (JP); HAMADA Masahiro, Yokohama-shi Kanagawa 244-8588 (JP); TOMINAGA Makoto, Komaki-shi Aichi 485-0831 (JP); UKITA Yoshio, Komaki-shi Aichi 485-0831 (JP); MUROZONO Akira, Komaki-shi Aichi 485-0831 (JP); OTOKITA Seiya, Komaki-shi Aichi 485-0831 (JP)
(74) Representative: Wiedemann, Peter
(86) International application number: PCT/JP2009/059171
(87) International publication number: WO 2010/134157

(57) **Abstract**

An object of the present invention is to provide a small and easy-to-handle splitter module. A splitter module 1 includes: an optical splitter S that splits an input optical signal to output split optical signals; a lower housing 10 that houses the optical splitter S, and a plurality of output sockets 40 that are connected to the optical splitter S via an optical fiber core C2, and that have insertion openings 41 formed at one end; an upper housing 20 that is provided on a top surface 10c of the lower housing 10, and that houses the plurality of output sockets 40; and fixing parts 30 attached to the lower housing 10. The output sockets 40 are rotatably attached to the fixing parts 30 so that the insertion openings 41 of the output sockets 40 are close to or spaced apart from the fixing parts 30.

## Description

### Technical Field

The present invention relates to a splitter module including an optical splitter.

### Background Art

Conventionally, there has been known a splitter module that distributes an optical signal (refer to the following Patent Literature 1). The splitter module is housed in an MDF (Main Distributing Frame) installed in a collective housing, and has a role in splitting an optical signal that flows through an optical cable pulled down from an overhead into a plurality of optical signals to be transmitted to each floor.

### Citation List

### Patent Literature

Patent Literature 1: Japanese Patent Laid-Open No. 2007-121398

### Summary of Invention

### Technical Problem

The splitter module described in the above-described Patent Literature 1 is often mounted in an MDF in a previously-built building. In that case, since other apparatuses, cables, etc. have already been mounted in the MDF, it is often difficult to make a space for attaching the splitter module, and to handle the module in so doing.

The present invention is made to solve the above described problems, and an object of the present invention is to provide a small and easy-to-handle splitter module.

### Solution to Problem

A splitter module of the present invention includes: an optical splitter that splits an input optical signal to output split optical signals; a lower housing that houses the optical splitter, and a plurality of optical sockets or optical adapters having insertion openings formed at one end in which optical connectors are inserted, the optical sockets or optical adapters being connected to the optical splitter via an optical fiber core; an upper housing that is provided on a top surface of the lower housing, and that houses the plurality of optical sockets or optical adapters; and a fixing part attached to the lower housing, and each optical socket or each optical adapter is rotatably attached to the fixing part so that the insertion opening of each of the optical sockets or each of the optical adapters is close to or spaced apart from the fixing part.

According to such splitter module, since the housing that houses the optical sockets or the optical adapters (hereinafter also referred to as the "optical sockets etc.") is arranged in a two-tiered manner, an area required for attachment can be made small. In addition, since the optical sockets are attached so that the insertion openings of the optical sockets etc. are close to or spaced apart from the fixing part, the optical connectors can be attached to and detached from the optical sockets etc. in a state where the insertion openings of the optical sockets etc. are spaced apart from the fixing part (a state where the insertion openings are moved upwardly), and thus attachment and detachment of the optical connectors to and from the splitter module become easy. Hence, reduction in size of the splitter module can be achieved, and handling thereof becomes easy.

In the splitter module of the present invention, it is preferable that the plurality of optical sockets or optical adapters housed in the lower housing are rotatably attached to the lower housing, and the upper housing is rotatably attached to the lower housing.

In this case, since the optical sockets etc. housed in the lower housing (hereinafter also referred to as "lower optical sockets etc.") are rotatably attached to the lower housing, the insertion openings of the lower optical sockets etc. can be moved upwardly to attach and detach the optical connectors. In addition, since the upper housing is rotatably attached to the lower housing, the insertion openings of the optical sockets etc. housed in the upper housing (hereinafter also referred to as "upper optical sockets etc.") can be moved upwardly by rotating the upper housing to attach and detach the optical connectors. Hence, attachment and detachment of the optical connector to and from the splitter module become easy.

In the splitter module of the present invention, it is preferable that the plurality of optical sockets or optical adapters housed in the upper housing are rotatably attached to the upper housing.

In this case, since the upper optical sockets etc. are rotatably attached to the upper housing, the insertion openings of the upper optical sockets etc. can be moved upwardly to attach and detach the optical connectors. Hence, attachment and detachment of the optical connector to and from the splitter module become easy.

In the splitter module of the present invention, it is preferable that the plurality of optical sockets or optical adapters housed in the lower housing are rotatably attached to the lower housing, and that the plurality of optical sockets or optical adapters housed in the upper housing are rotatably attached to the upper housing.

In this case, since the lower optical sockets etc. are rotatably attached to the lower housing, the insertion openings of the lower optical sockets etc. can be moved upwardly to attach and detach the optical connectors. In addition, since the upper optical sockets etc. are rotatably attached to the upper housing, the insertion openings of the upper optical sockets etc. can be moved upwardly to attach and detach the optical connectors. Hence, attachment and detachment of the optical connector to and from the splitter module become easy.

In the splitter module of the present invention, it is preferable that the plurality of optical sockets or optical adapters housed in the lower housing are exposed when viewed from an upper side of the lower housing, and that the plurality of optical sockets or optical adapters housed in the upper housing are exposed when viewed from an upper side of the upper housing.

In this case, since upper parts of the optical sockets etc. housed in each of the housings are exposed from the housing, it becomes possible to directly handle the optical sockets etc. from an upper side of the splitter module.

In the splitter module of the present invention, it is preferable that the plurality of optical sockets or optical adapters housed in the lower housing protrude more outwardly than the upper housing when viewed from the upper side of the upper housing.

In this case, since the optical sockets etc. housed in the lower housing are not covered with the upper housing, the optical sockets etc. in the lower housing can be handled more easily without moving the upper housing.

A splitter module of the present invention includes: an optical splitter that splits an input optical signal to output split optical signals; and a housing box that houses a plurality of optical sockets or optical adapters that are connected to the optical splitter via an optical fiber core and that have insertion openings formed at one end in which optical connectors are inserted, the housing box having formed a guide opening for guiding the optical fiber core thereinside, and the housing box includes: a lower housing that houses the plurality of optical sockets or optical adapters; an upper housing that is provided on a top surface of the lower housing, and that houses the plurality of optical sockets or optical adapters; and a fixing part attached to the lower housing, and each optical socket or each optical adapter is rotatably attached to the fixing part so that the insertion opening of each of the optical sockets or each of the optical adapters is close to or spaced apart from the fixing part.

According to such splitter module, since the housing that houses the optical sockets or the optical adapters (hereinafter referred to as the "optical sockets etc.") is arranged in a two-tiered manner, an area required for attachment can be made small. In addition, since the optical splitter is located outside the housing box, a size of the housing box can be reduced, and the optical splitter and the housing box can be flexibly arranged in a distributing frame. In addition, since the optical sockets etc. are attached so that the insertion openings of the optical sockets etc. are close to or spaced apart from the fixing part, the optical connectors can be attached to and detached from the optical sockets etc. in a state where the insertion openings of the optical sockets etc. are spaced apart from the fixing part (a state where the insertion openings are moved upwardly), and thus attachment and detachment of the optical connectors to and from the splitter module become easy. Hence, reduction in size of the splitter module can be achieved, and handling thereof becomes easy.

In the splitter module of the present invention, it is preferable that the plurality of optical sockets or optical adapters housed in the lower housing are rotatably attached to the lower housing, and that the upper housing is rotatably attached to the lower housing.

In this case, since the optical sockets etc. housed in the lower housing (hereinafter also referred to as "lower optical sockets etc.") are rotatably attached to the lower housing, the insertion openings of the lower optical sockets etc. can be moved upwardly to attach and detach the optical connectors. In addition, since the upper housing is rotatably attached to the lower housing, the insertion openings of the optical sockets etc. housed in the upper housing (hereinafter also referred to as "upper optical sockets etc.") can be moved upwardly by rotating the upper housing to attach and detach the optical connectors. Hence, attachment and detachment of the optical connector to and from the splitter module become easy.

In the splitter module of the present invention, it is preferable that the plurality of optical sockets or optical adapters housed in the upper housing are rotatably attached to the upper housing.

In this case, since the upper optical sockets etc. are rotatably attached to the upper housing, the insertion openings of the upper optical sockets etc. can be moved upwardly to attach and detach the optical connectors. Hence, attachment and detachment of the optical connector to and from the splitter module become easy.

In the splitter module of the present invention, it is preferable that the plurality of optical sockets or optical adapters housed in the lower housing are rotatably attached to the lower housing, and that the plurality of optical sockets or optical adapters housed in the upper housing are rotatably attached to the upper housing.

In this case, since the lower optical sockets etc. are rotatably attached to the lower housing, the insertion openings of the lower optical sockets etc. can be moved upwardly to attach and detach the optical connectors. In addition, since the upper optical sockets etc. are rotatably attached to the upper housing, the insertion openings of the upper optical sockets etc. can be moved upwardly to attach and detach the optical connectors. Hence, attachment and detachment of the optical connector to and from the splitter module become easy.

In the splitter module of the present invention, it is preferable that the plurality of optical sockets or optical adapters housed in the lower housing are exposed when viewed from an upper side of the lower housing, and the plurality of optical sockets or optical adapters housed in the upper housing are exposed when viewed from an upper side of the upper housing.

In this case, since upper parts of the optical sockets etc. housed in each housing are exposed from the housing, it becomes possible to directly handle the optical sockets etc. from an upper side of the splitter module (the housing box).

In the splitter module of the present invention, it is preferable that the plurality of optical sockets or optical adapters housed in the lower housing protrude more outwardly than the upper housing when viewed from the upper side of the upper housing.

In this case, since the optical sockets etc. housed in the lower housing are not covered with the upper housing, the optical sockets etc. in the lower housing can be handled more easily without moving the upper housing.

### Advantageous Effects of Invention

According to such splitter module, since the housing that houses the optical sockets etc. is arranged in a two-tiered manner, and the optical sockets etc. are attached so that the insertion openings of the optical sockets etc. are close to or spaced apart from the fixing part, reduction in size of the module can be achieved, and handling thereof becomes easy.

### Brief Description of Drawings

[Figure 1] Figure 1 is a perspective view of a splitter module according to a first embodiment when viewed from a front.
[Figure 2] Figure 2 is a perspective view of the splitter module shown in Figure 1 when viewed from a rear.
[Figure 3] Figure 3 is a perspective view showing a state where an upper housing shown in Figure 1 has been rotated.
[Figure 4] Figure 4 is a plan view of a lower housing shown in Figure 1.
[Figure 5] Figure 5 is a perspective view of output sockets shown in Figure 1 when viewed from a lower side.
[Figure 6] Figure 6 is a perspective view of an output socket according to a modified example when viewed from the lower side.
[Figure 7] Figure 7 is the perspective view of the output socket according to the modified example when viewed from the lower side.
[Figure 8] Figures 8(a) and 8(b) are perspective views of a splitter module according to the modified example.
[Figure 9] Figure 9 is a perspective view of a splitter module according to a second embodiment when viewed from the front.
[Figure 10] Figure 10 is a perspective view of a socket housing box shown in Figure 9 when viewed from the front.
[Figure 11] Figure 11 is a perspective view of the socket housing box shown in Figure 10 when viewed from the rear.
[Figure 12] Figure 12 is a perspective view showing a state where an upper housing shown in Figure 10 has been rotated.
[Figure 13] Figure 13 is a plan view of a lower housing shown in Figure 10.
[Figure 14] Figure 14 is a perspective view of output sockets shown in Figure 10 when viewed from the lower side.
[Figure 15] Figure 15 is the perspective view of the output socket according to the modified example when viewed from the lower side.
[Figure 16] Figure 16 is the perspective view of the output socket according to the modified example when viewed from the lower side.
[Figure 17] Figures 17(a) and 17(b) are perspective views of a socket housing box according to the modified example.

### Description of Embodiments

### (First embodiment)

Hereinafter, a first embodiment of the present invention will be described in detail with reference to accompanying drawings. It is to be noted that the same symbols are given to the same or equivalent components in description of the drawings, and overlapping description is omitted.

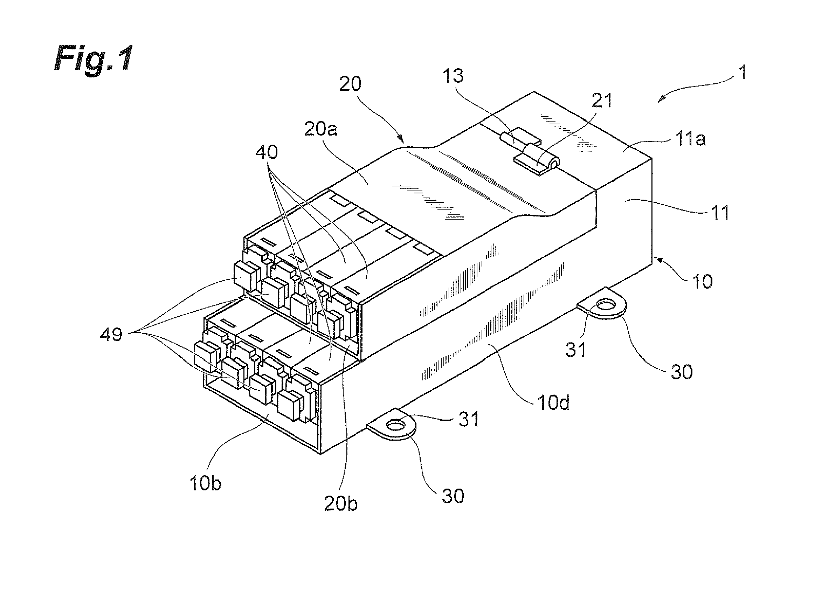

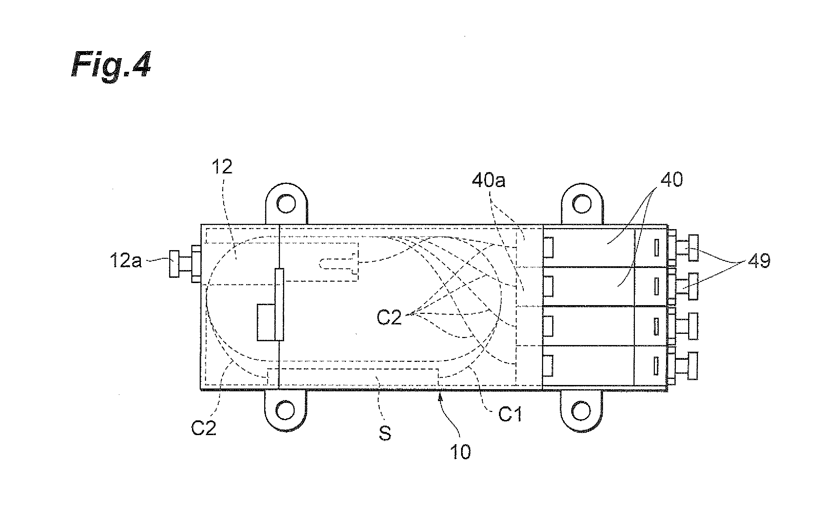

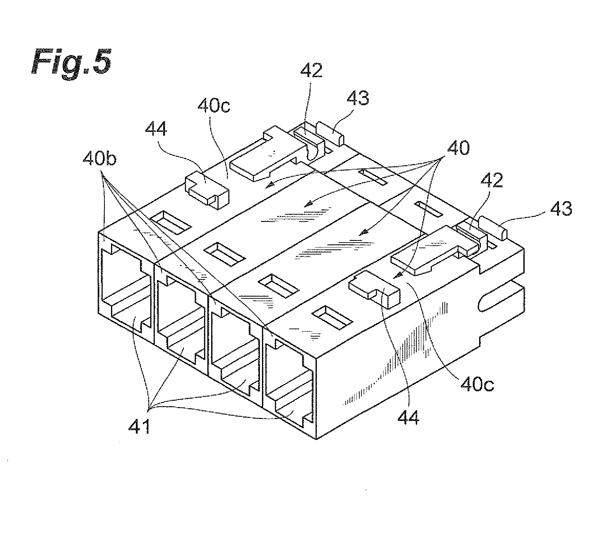

Figures 1 to 3 are perspective views of a splitter module according to a first embodiment. Figure 4 is a plan view of a lower housing shown in Figure 1. Figure 5 is a perspective view of output sockets (optical sockets) shown in Figure 1 when viewed from a lower side.

A splitter module 1 includes a lower housing 10, an upper housing 20, and fixing parts 30, and has a substantially rectangular parallelepiped shape as a whole. A length, a width, and a height of the splitter module 1 are 100 millimeters, 39.5 millimeters, and 29.1 millimeters, respectively. However, a size of the splitter module 1 is not limited to this.

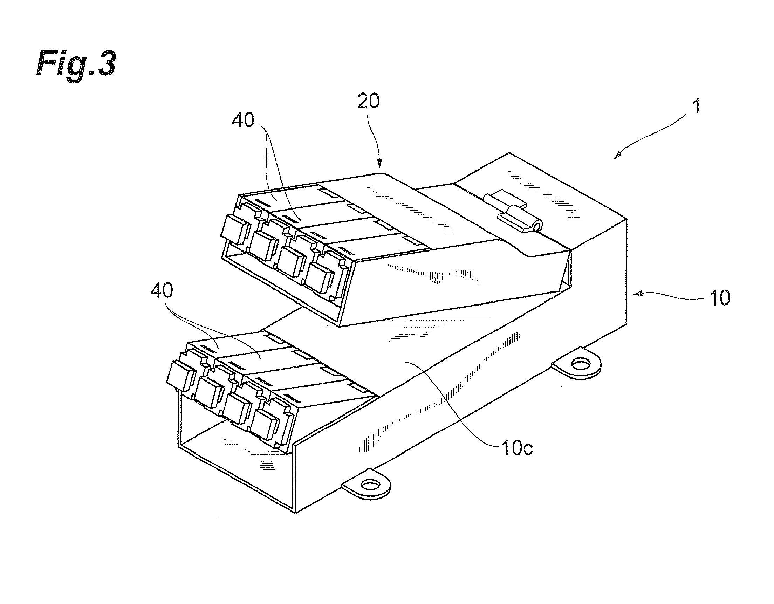

The lower housing 10 has a substantially rectangular parallelepiped shape. Since one end (hereinafter referred to as a "rear end") of a longitudinal direction of the lower housing 10 protrudes upwardly to form a convex portion 11, a cross section along the longitudinal direction of the lower housing 10 has an L shape. Inside the lower housing 10, formed is a space (an inner space) for housing an optical splitter S, and optical sockets 12 and 40 that will be described hereinafter. Opened are a front end surface 10b of the lower housing 10, a vicinity of a front end of a top surface 10c (refer to Figure 3) continuous to the front end surface 10b, and a front end surface of the convex portion 11. On both side surfaces 10d of the lower housing 10, the substantially semicircular fixing parts 30 having screw holes 31 formed along a vertical direction of the lower housing 10 are provided near a front end and the rear end of the lower housing 10 so as to be continuous to a bottom surface of the lower housing 10. A rod-like member 13 extending along a width direction is attached to a front end of a top surface 11 a of the convex portion 11.

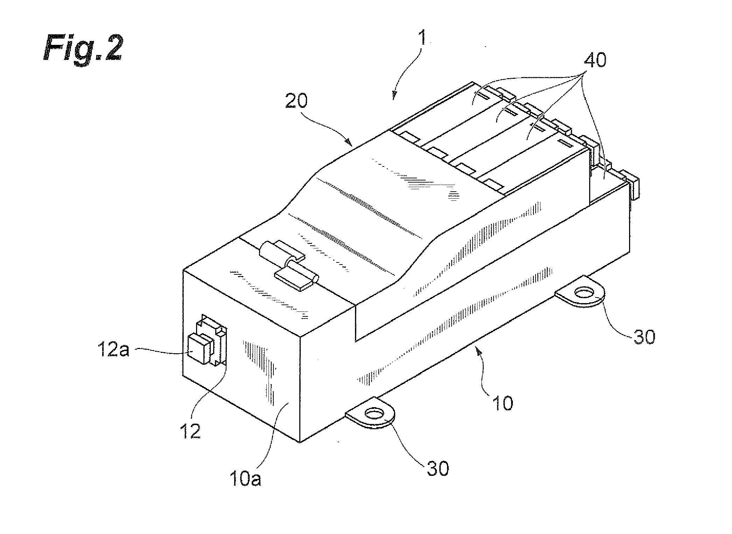

On a rear end surface 10a of the lower housing 10, exposed is a rear end (an insertion opening) of an optical socket (hereinafter referred to as an "input socket") 12 in which an optical connector is inserted and fixed (refer to Figure 2). The input socket 12 has a substantially rectangular parallelepiped shape. In Figures 2 and 4, although the insertion opening of the input socket 12 is covered with a cap 12a, the cap 12a is removed when the optical connector is inserted in the input socket 12.

A configuration in the inner space of the lower housing 10 will be described using Figure 4. The input socket 12 is housed along an inner wall corresponding to the one side surface 10d of the lower housing 10. In addition, the optical splitter S that splits an optical signal into eight to output the split eight optical signals is housed along an inner wall corresponding to the other side surface 10d of the lower housing 10 so as to be opposed to this input socket 12. Further, near a front end of the inner space, four optical sockets (hereinafter referred to as "output sockets") 40 in which the optical connectors are inserted and fixed are housed aligning in a width direction of the lower housing 10. At this time, the output sockets 40 are attached so that front end surfaces 40b thereof substantially correspond to the front end surface 10b of the lower housing 10. Therefore, when viewed from an upper side of the lower housing 10, the output sockets 40 are exposed from the lower housing 10.

A configuration of the output socket 40 will be described using Figure 5. The four output sockets 40 housed in the lower housing 10 are integrated with each other. Each of the output sockets has a substantially rectangular parallelepiped shape, and an insertion opening 41 in which the optical connector is inserted is formed in the front end surface 40b. Although the insertion openings 41 of the output sockets 40 are covered with caps 49 in Figures 1 to 4, the caps 49 are removed when the optical connectors are inserted in the output sockets 40. On bottom surfaces 40c of the two outermost output sockets of the four output sockets 40, provided are hook parts 42 for rotatably attaching the output sockets 40 to the lower housing 10, projecting parts 43, and claw parts 44 for fixing the output sockets 40 to the lower housing 10.

The hook part 42 is provided near a rear end of the bottom surface 40c of the output socket 40. The hook part 42 extends in a width direction of the output socket 40, and a cross section of the hook part 42 has a C shape opening downwardly (upwardly in Figure 5). The projecting part 43 is provided behind the hook part 42, and extends in the width direction of the output socket 40. A height of the projecting part 43 is smaller than a height of the hook part 42. The claw part 44 is provided anterior to a center of the bottom surface 40c of the output socket 40. The claw part 44 extends in the width direction of the output socket 40, and is formed so as to bend into an L shape toward the front of the output socket 40.

The four output sockets 40 are rotatably attached to the lower housing 10 due to engagement of a rod-like member (not shown) provided on a floor surface of the lower housing 10 along the width direction thereof and the hook parts 42. However, the rotation of the output sockets 40 is limited to a certain range since the projecting parts 43 are provided. In addition, the four output sockets 40 are fixed to the lower housing 10 due to engagement of claw parts having inverse L-shaped cross sections (not shown) that are provided on the floor surface of the lower housing 10 and the claw parts 44.

The upper housing 20 has a substantially rectangular parallelepiped shape, and is provided so as to be in contact with the top surface 10c of the lower housing 10 and the front end surface of the convex portion 11. A hook 21 is attached to a rear end of a top surface 20a of the upper housing 20. The hook 21 extends in a width direction of the upper housing 20, and a cross section of the hook 21 has a C shape opening downwardly. The upper housing 20 and the lower housing 10 are connected to each other due to engagement of this hook 21 and the above-mentioned rod-like member 13, and as a result of this, the upper housing 20 is rotatably attached to the lower housing 10 and the fixing parts 30.

Although a vicinity of a rear end of the top surface 20a of the upper housing 20 is continuous to the top surface 11 a of the convex portion 11, a center and a front end of a longitudinal direction of the top surface 20a bulges with respect to the rear end. A front end surface 20b of the upper housing 20 is located posterior to the front end surface 10b of the lower housing 10. Consequently, when the splitter module 1 is viewed from an upper side of the upper housing 20, the plurality of output sockets 40 housed in the lower housing 10 protrude more outwardly (forwardly) than the upper housing 20.

A space (an inner space) for housing the output sockets 40 is formed inside the upper housing 20. Opened are the front end surface 20b, a vicinity of the front end of the top surface 20a continuous to the front end surface 20b, and a rear end surface of the upper housing 20. Hence, a front end surface of the convex portion and the rear end surface of the upper housing 20 are communicated with each other.

Near a front end of the inner space of the upper housing 20, the four output sockets 40 are housed aligning in the width direction of the upper housing 20. At this time, the output sockets 40 are attached so that the front end surfaces 40b thereof substantially correspond to the front end surface 20b of the upper housing 20. Therefore, when viewed from the upper side of the upper housing 20, the output sockets 40 are exposed from the upper housing 20. The four output sockets 40 housed in the upper housing 20 are integrated with each other, and a configuration of the output socket 40 is similar to that of the output socket 40 housed in the lower housing 10 (refer to Figure 5). In addition, an attachment method of the output socket 40 to the upper housing 20 is also similar to an attachment method thereof to the lower housing 10.

The input socket 12 and one end of the optical splitter S are connected via an optical fiber core C1. Eight optical fiber cores C2 are attached to the other end of optical splitter S, and the optical splitter S and rear ends 40a of the output sockets 40 are connected to each other via these optical fiber cores C2. The optical fiber cores C2 connected to the output sockets 40 in the lower housing 10 are, for example, housed in the lower housing 10 as shown in Figure 4. The optical fiber cores C2 connected to the output sockets 40 in the upper housing 20 have entered the upper housing 20 from the lower housing 10 through the front end surface of the convex portion 11 and the rear end surface of the upper housing 20.

As described above, according to the embodiment, since the housing that houses the output sockets 40 is arranged in a two-tiered manner, an area required for attachment can be made small. In addition, since the output sockets 40 are attached so that the insertion openings 41 of the output sockets 40 are close to or spaced apart from the fixing parts 30, the optical connectors can be attached to and detached from the output sockets 40 in a state where the insertion openings 41 are spaced apart from the fixing parts 30 (a state where the insertion openings 41 are moved upwardly), and thus attachment and detachment of the optical connectors to and from the splitter module 1 become easy. Hence, reduction in size of the splitter module 1 can be achieved, and handling thereof becomes easy.

Particularly, since the output sockets 40 housed in the lower housing 10 are rotatably attached to the lower housing 10 in the embodiment, the insertion openings 41 of the output sockets 40 can be moved upwardly to attach and detach the optical connectors (refer to Figure 3). In addition, since the upper housing 20 is rotatably attached to the lower housing 10, the insertion openings 41 of the output sockets 40 housed in the upper housing 20 can be moved upwardly by rotating the upper housing 20 to attach and detach the optical connectors (refer to Figure 3). Further, since the output sockets 40 housed in the upper housing 20 can be rotated with respect to the upper housing 20, the optical connectors can be easily attached to and detached from the output sockets 40 without rotating the upper housing 20.

In addition, according to the embodiment, since upper parts of the output sockets 40 housed in the lower housing 10 and the upper housing 20 are exposed from those housings, it becomes possible to directly handle the output sockets 40 from an upper side of the splitter module 1.

In addition, according to the embodiment, since the output sockets 40 housed in the lower housing 10 are not covered with the upper housing 20, the output sockets 40 in the lower housing 10 can be handled more easily without moving the upper housing 20.

As described above, the present invention has been described in detail based on the embodiment thereof. However, the present invention is not limited to the above embodiment. The following various modifications of the present invention can be performed without departing from the scope of the invention.

In the above-described embodiment, although the upper housing 20 is rotatably attached to the lower housing 10, and the output sockets 40 in the upper housing 20 are rotatably attached to the upper housing 20, only one of these techniques may be employed. For example, if an upper housing is rotatably attached to a lower housing, output sockets in the upper housing may be completely fixed to the upper housing.

When the upper housing is rotatably attached to the lower housing, fixing means for maintaining a state where the upper housing is inclined to the lower housing may be provided in a splitter module. In this case, since the inclined state of the housing can be maintained, an optical connector can be attached and detached more easily.

In addition, the splitter module may be configured so as to rotate the lower housing. For example, if the lower housing is rotatably attached to a fixing part including a pedestal part whose top surface has a same shape as a bottom surface of the lower housing, the optical connectors can be easily attached and detached by moving upwardly insertion openings of the output sockets in the lower housing.

Although the four output sockets 40 are integrated with each other in the above-described embodiment, in addition to this, a width of the splitter module may be made shorter by removing an inner wall of each of the sockets. As a matter of course, components corresponding to the above-described hook part 42, projecting part 43, and claw part 44 may be attached to each of the output sockets without integrating the output sockets.

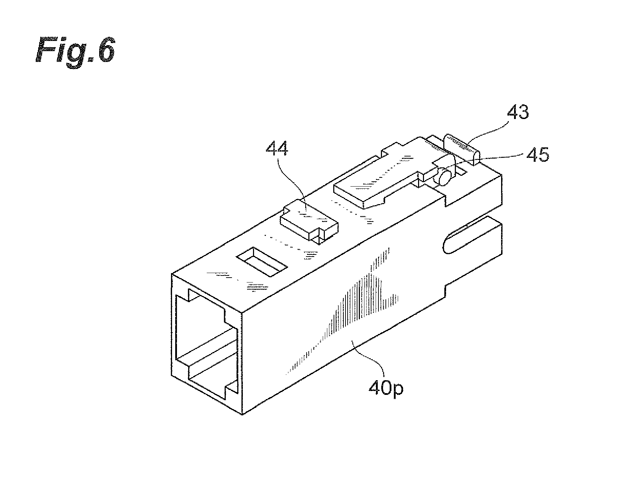

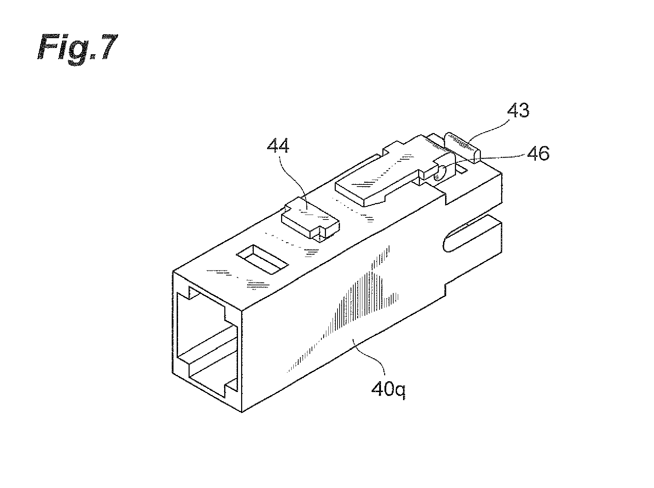

Means for rotatably attaching the output socket to the upper housing or the lower housing is not limited to the above-mentioned hook part 42. For example, an output socket 40p including a cylindrical shaft member 45 protruding in a width direction may be used (refer to Figure 6), or an output socket 40q including a cylindrical shaft hole 46 formed in the width direction may be used (refer to Figure 7). When the output socket 40p is used, a shaft hole in which the shaft member 45 is inserted may be provided in an inner wall corresponding to a side surface of the housing, and when the output socket 40q is used, a shaft member to insert in the shaft hole 46 may be provided on the inner wall.

When the output socket is rotatably attached to the upper housing or the lower housing, fixing means for maintaining a state where the output socket is inclined to the housing may be provided in the splitter module. In this case, since the inclined state of the output socket can be maintained, the optical connector can be attached and detached more easily.

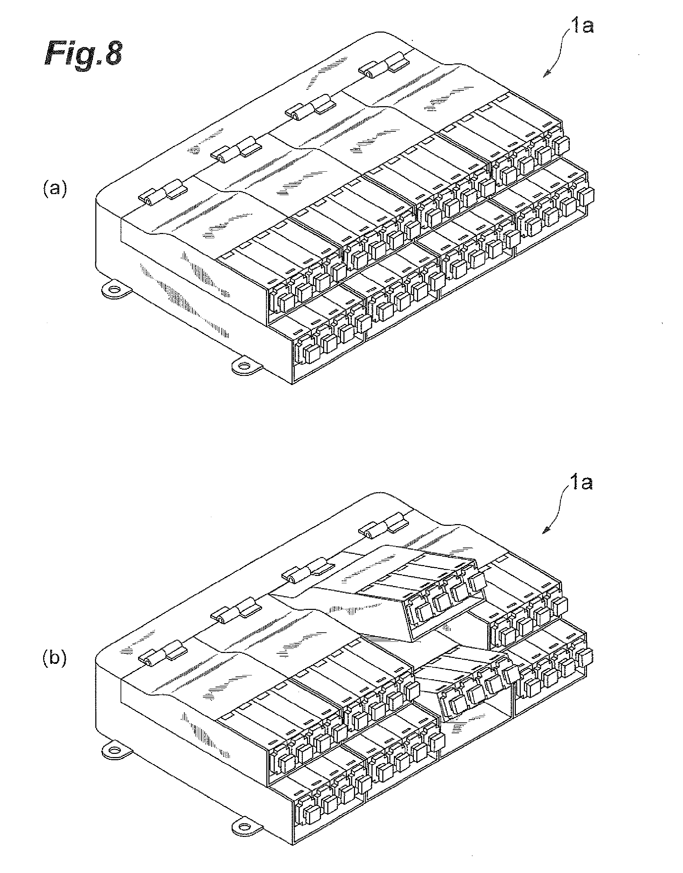

Although the four output sockets 40 are aligned in the width direction of the splitter module 1 in the above-described embodiment, the number of the output sockets to align is not limited to this. For example, as shown in Figures 8(a) and 8(b), may be used a splitter module 1a in which sixteen output sockets are aligned in a lower housing and an upper housing, respectively. In the splitter module 1a, the upper housing is comprised of four housings that house four output sockets, and each of the housings can be rotated independently (refer to Figure 8(b)).

In the above-described embodiment, although the plurality of output sockets 40 housed in the lower housing 10 are protruded anterior to the upper housing 20, it is arbitrary whether or not the output sockets 40 are protruded as described above. In addition, in the above-described embodiment, although a part of the top surface 10c of the lower housing 10 and a part of the top surface 20a of the upper housing 20 are opened, it is also arbitrary whether or not the top surfaces of the housings are opened.

In addition, in order to make an installation area of a splitter module smaller, corners of a rear end of the splitter module may be chamfered to make a curved surface. As a result of this, a possibility can be reduced that an optical fiber cord, an optical cable, etc. are caught on the corners of the splitter module to cause disconnection.

Although the splitter module 1 houses the optical sockets in the above-described embodiment, optical adapters may be housed instead of the optical sockets. For example, it is possible to apply the present invention to a splitter module that houses an optical adapter to fit in an SC connector etc.

### (Second embodiment)

Hereinafter, a second embodiment of the present invention will be described in detail with reference to the accompanying drawings. It is to be noted that the same symbols are given to the same or equivalent components in description of the drawings, and overlapping description is omitted.

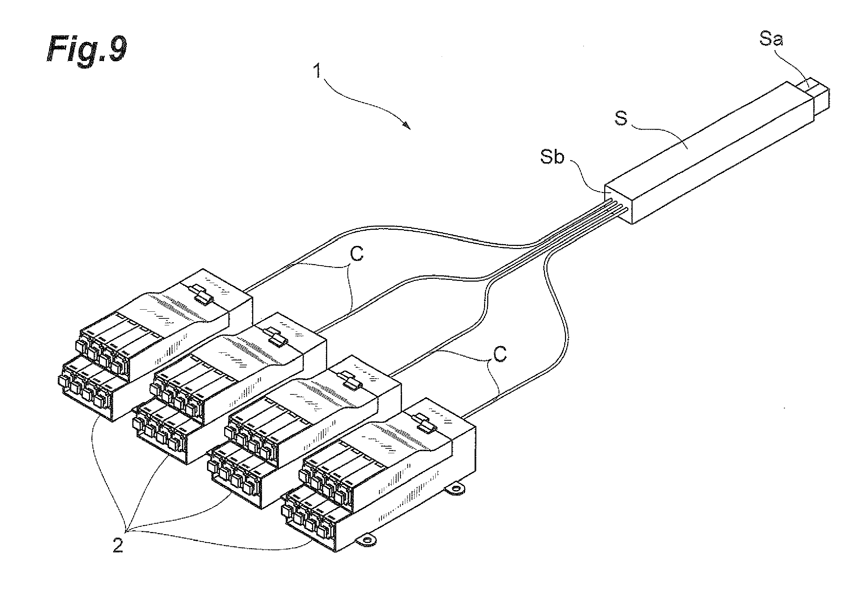

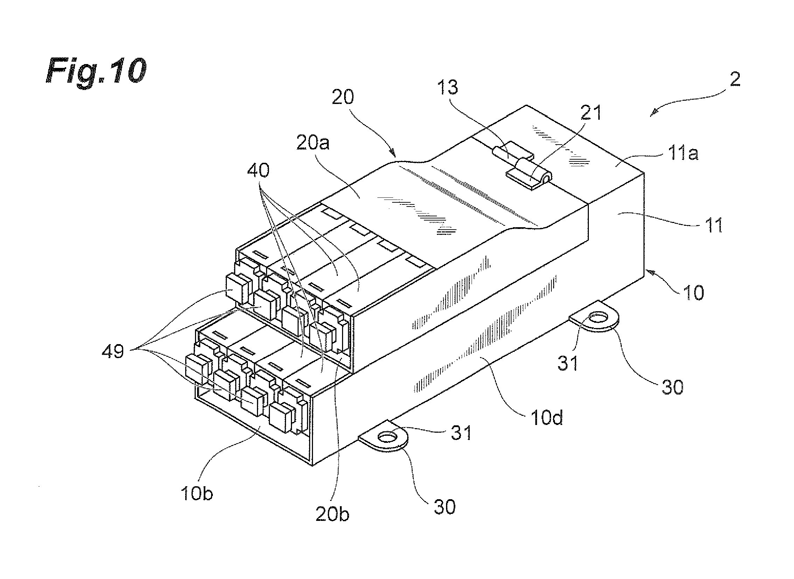

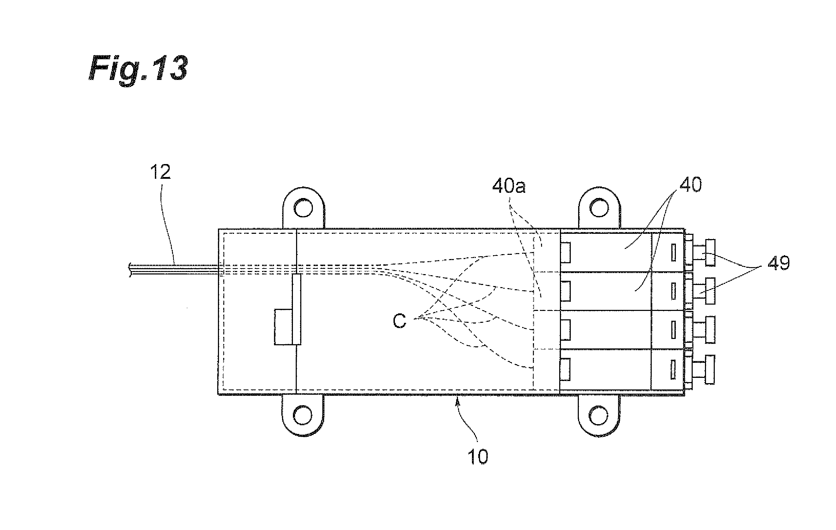

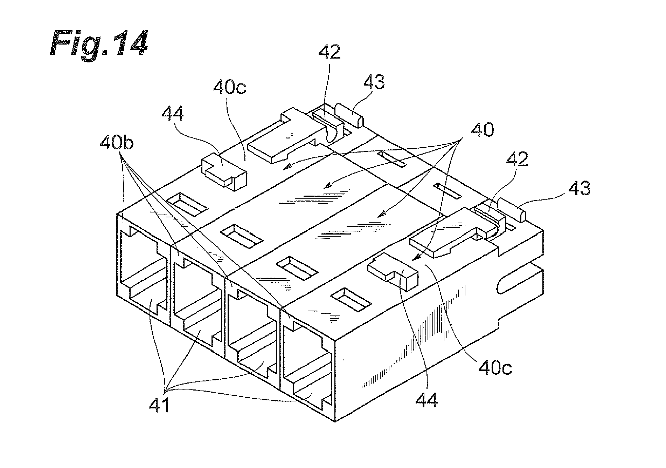

Figure 9 is a perspective view of a splitter module according to a second embodiment. Figures 10 to 12 are perspective views of a socket housing box shown in Figure 9. Figure 13 is a plan view of a lower housing shown in Figure 10. Figure 14 is a perspective view of output sockets (optical sockets) shown in Figure 10 when viewed from a lower side.

The splitter module 1 includes the optical splitter S and four socket housing boxes 2 that house a plurality of optical sockets. The optical splitter S and each of the optical sockets in the socket housing box 2 are connected to each other via an optical fiber core C. It is to be noted that a length of the optical fiber core C to be exposed may be arbitrarily decided.

The optical splitter S is an optical component that splits an optical signal into thirty-two optical signals to output them. An insertion opening Sa in which an optical connector is inserted is provided in one end (this is set as a rear end) of the optical splitter S, and the thirty-two optical fiber cores C that transmit the split optical signals are attached to the other end (a front end), It is to be noted that the eight optical fiber cores C are shown with one line for simple drawing.

The socket housing box 2 is the housing for housing the output sockets (the optical sockets) 40 that will be described hereinafter. The socket housing box 2 includes the lower housing 10, the upper housing 20, and the fixing parts 30, and has a substantially rectangular parallelepiped shape as a whole. A length, a width, and a height of the socket housing box 2 are 80 millimeters, 39.5 millimeters, and 29.1 millimeters, respectively. However, a size of the socket housing box 2 is not limited to this.

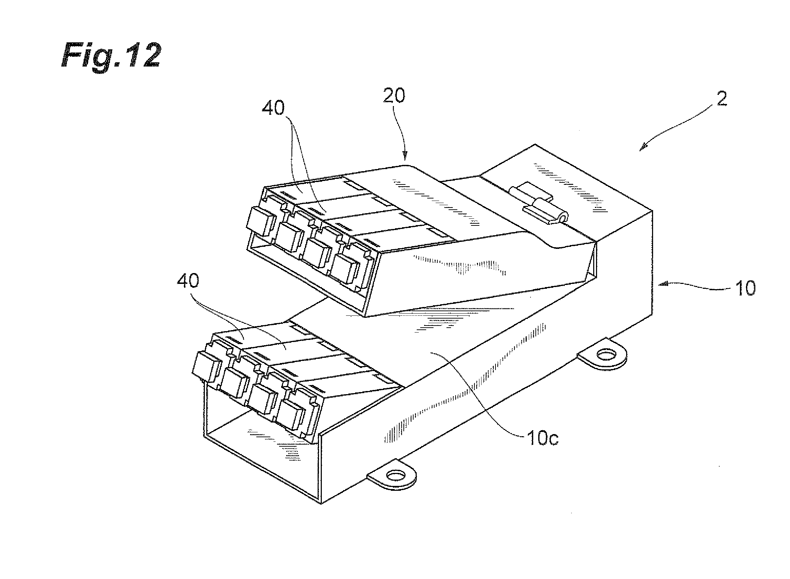

The lower housing 10 has a substantially rectangular parallelepiped shape. Since the one end (hereinafter referred to as the "rear end") of the longitudinal direction of the lower housing 10 protrudes upwardly to form the convex portion 11, the cross section along the longitudinal direction of the lower housing 10 has the L shape. A space (an inner space) for housing the output sockets 40 is formed inside the lower housing 10. Opened are the front end surface 10b of the lower housing 10, the vicinity of the front end of the top surface 10c (refer to Figure 12) continuous to the front end surface 10b, and the front end surface of the convex portion 11.

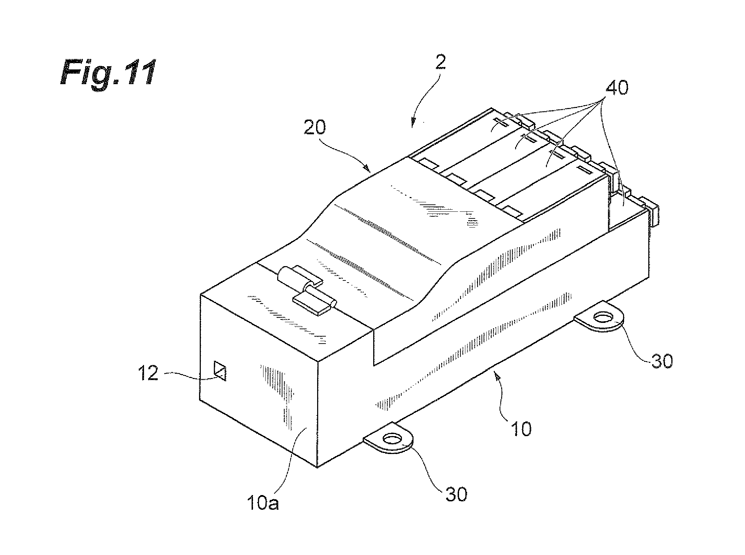

On the both side surfaces 10d of the lower housing 10, the substantially semicircular fixing parts 30 having the screw holes 31 formed along the vertical direction of the lower housing 10 are provided near the front end and the rear end of the lower housing 10 so as to be continuous to the bottom surface of the lower housing 10. A guide opening 12 that guides the eight optical fiber cores C inside the lower housing 10 is formed in the rear end surface 10a of the lower housing 10 (refer to Figure 11). The rod-like member 13 extending along the width direction is attached to the front end of the top surface 11a of the convex portion 11.

As shown in Figure 13, near a front end of the inner space of the lower housing 10, the four optical sockets (hereinafter referred to as the "output sockets") 40 in which the optical connectors are inserted and fixed are housed aligning in the width direction of the lower housing 10. At this time, the output sockets 40 are attached so that the front end surfaces 40b thereof substantially correspond to the front end surface 10b of the lower housing 10. Therefore, when viewed from the upper side of the lower housing 10, the output sockets 40 are exposed from the lower housing 10.

A configuration of the output socket 40 will be described using Figure 14. The four output sockets 40 housed in the lower housing 10 are integrated with each other. Each of the output sockets has the substantially rectangular parallelepiped shape, and the insertion opening 41 in which the optical connector is inserted is formed in the front end surface 40b. Although the insertion openings 41 of the output sockets 40 are covered with the caps 49 in Figures 9 to 13, the caps 49 are removed when the optical connectors are inserted in the output sockets 40. On the bottom surfaces 40c of the two outermost output sockets of the four output sockets 40, provided are the hook parts 42 for rotatably attaching the output sockets 40 to the lower housing 10, the projecting parts 43, and the claw parts 44 for fixing the output sockets 40 to the lower housing 10.

The hook part 42 is provided near the rear end of the bottom surface 40c of the output socket 40. The hook part 42 extends in the width direction of the output socket 40, and the cross section of the hook part 42 has the C shape opening downwardly (upwardly in Figure 14). The projecting part 43 is provided behind the hook part 42, and extends in the width direction of the output socket 40. The height of the projecting part 43 is smaller than the height of the hook part 42. The claw part 44 is provided anterior to the center of the bottom surface 40c of the output socket 40. The claw part 44 extends in the width direction of the output socket 40, and is formed so as to bend into the L shape toward the front of the output socket 40.

The four output sockets 40 are rotatably attached to the lower housing 10 due to engagement of the rod-like member (not shown) provided on the floor surface of the lower housing 10 along the width direction thereof and the hook parts 42. However, the rotation of the four output sockets 40 is limited to the certain range since the projecting parts 43 are provided. In addition, the four output sockets 40 are fixed to the lower housing 10 due to engagement of the claw parts having inverse L-shaped cross sections (not shown) that are provided on the floor surface of the lower housing 10 and the claw parts 44.

The upper housing 20 has the substantially rectangular parallelepiped shape, and is provided so as to be in contact with the top surface 10c of the lower housing 10 and the front end surface of the convex portion 11. The hook 21 is attached to the rear end of the top surface 20a of the upper housing 20. The hook 21 extends in the width direction of the upper housing 20, and the cross section of the hook 21 has the C shape opening downwardly. The upper housing 20 and the lower housing 10 are connected to each other due to engagement of this hook 21 and the above-mentioned rod-like member 13, and as a result of this, the upper housing 20 is rotatably attached to the lower housing 10 and the fixing parts 3 0.

Although the vicinity of the rear end of the top surface 20a of the upper housing 20 is continuous to the top surface 11a of the convex portion 11, the center and the front end of the longitudinal direction of the top surface 20a bulges with respect to the rear end. The front end surface 20b of the upper housing 20 is located posterior to the front end surface 10b of the lower housing 10. Consequently, when the socket housing box 2 is viewed from the upper side of the upper housing 20, the plurality of output sockets 40 housed in the lower housing 10 protrude more outwardly (forwardly) than the upper housing 20.

The space (the inner space) for housing the output sockets 40 is formed inside the upper housing 20. Opened are the front end surface 20b, the vicinity of the front end of the top surface 20a continuous to the front end surface 20b, and the rear end surface of the upper housing 20. Hence, the front end surface of the convex portion and the rear end surface of the upper housing 20 are communicated with each other.

Near the front end of the inner space of the upper housing 20, the four output sockets 40 are housed aligning in the width direction of the upper housing 20. At this time, the output sockets 40 are attached so that the front end surfaces 40b thereof substantially correspond to the front end surface 20b of the upper housing 20. Therefore, when viewed from the upper side of the upper housing 20, the output sockets 40 are exposed from the upper housing 20. The four output sockets 40 housed in the upper housing 20 are integrated with each other, and the configuration of the output socket 40 is similar to that of the output socket 40 housed in the lower housing 10 (refer to Figure 14). In addition, the attachment method of the output socket 40 to the upper housing 20 is also similar to the attachment method thereof to the lower housing 10.

The optical fiber cores C that have entered the lower housing 10 through the guide opening 12 have been connected to the rear ends 40a of the output sockets 40. The optical fiber cores C connected to the output sockets 40 in the lower housing 10 are, for example, housed in the lower housing 10 as shown in Figure 13. The optical fiber cores C connected to the output sockets 40 in the upper housing 20 have entered the upper housing 20 from the lower housing 10 through the front end surface of the convex portion 11 and the rear end surface of the upper housing 20.

As described above, according to the embodiment, since the housing that houses the output sockets 40 is arranged in the two-tiered manner, the area required for attachment can be made small. In addition, since the optical splitter S is located outside the socket housing box 2, a size of the socket housing box 2 can be reduced, and the optical splitter S and the socket housing box 2 can be flexibly arranged in the distributing frame. In addition, since the output sockets 40 are attached so that the insertion openings 41 of the output sockets 40 are close to or spaced apart from the fixing parts 30, the optical connectors can be attached to and detached from the output sockets 40 in the state where the insertion openings 41 are spaced apart from the fixing parts 30 (the state where the insertion openings 41 are moved upwardly), and thus attachment and detachment of the optical connectors to and from the splitter module 1 become easy. Hence, reduction in size of the splitter module 1 can be achieved, and handling thereof becomes easy.

Particularly, since the output sockets 40 housed in the lower housing 10 are rotatably attached to the lower housing 10 in the embodiment, the insertion openings 41 of the output sockets 40 can be moved upwardly to attach and detach the optical connectors (refer to Figure 12). In addition, since the upper housing 20 is rotatably attached to the lower housing 10, the insertion openings 41 of the output sockets 40 housed in the upper housing 20 can be moved upwardly by rotating the upper housing 20 to attach and detach the optical connectors (refer to Figure 12). Further, since the output sockets 40 housed in the upper housing 20 can be rotated with respect to the upper housing 20, the optical connector can be easily attached to and detached from the output sockets 40 without rotating the upper housing 20.

In addition, according to the embodiment, since the upper parts of the output sockets 40 housed in the lower housing 10 and the upper housing 20 are exposed from those housings, it becomes possible to directly handle the output sockets 40 from an upper side of the socket housing box 2.

In addition, according to the embodiment, since the output sockets 40 housed in the lower housing 10 are not covered with the upper housing 20, the output sockets 40 in the lower housing 10 can be handled more easily without moving the upper housing 20.

As described above, the present invention has been described in detail based on the embodiment thereof. However, the present invention is not limited to the above embodiment. The following various modifications of the present invention can be performed without departing from the scope of the invention.

In the above-described embodiment, although the upper housing 20 is rotatably attached to the lower housing 10, and the output sockets 40 in the upper housing 20 are rotatably attached to the upper housing 20, only one of these techniques may be employed. For example, if an upper housing is rotatably attached to a lower housing, output sockets in the upper housing may be completely fixed to the upper housing.

When the upper housing is rotatably attached to the lower housing, fixing means for maintaining a state where the upper housing is inclined to the lower housing may be provided in a housing box. In this case, since the inclined state of the housing can be maintained, an optical connector can be attached and detached more easily.

In addition, a splitter module may be configured so as to rotate the lower housing. For example, if the lower housing is rotatably attached to a fixing part including a pedestal part whose top surface has a same shape as a bottom surface of the lower housing, the optical connector can be easily attached and detached by moving upwardly insertion openings of output sockets in the lower housing.

Although the four output sockets 40 are integrated with each other in the above-described embodiment, in addition to this, a width of the splitter module may be made shorter by removing an inner wall of each of the sockets. As a matter of course, components corresponding to the above-described hook part 42, projecting part 43, and claw part 44 may be attached to each of the output sockets without integrating the output sockets.

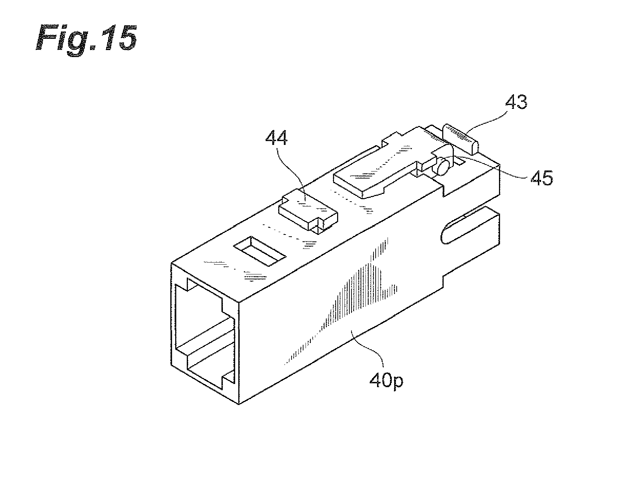

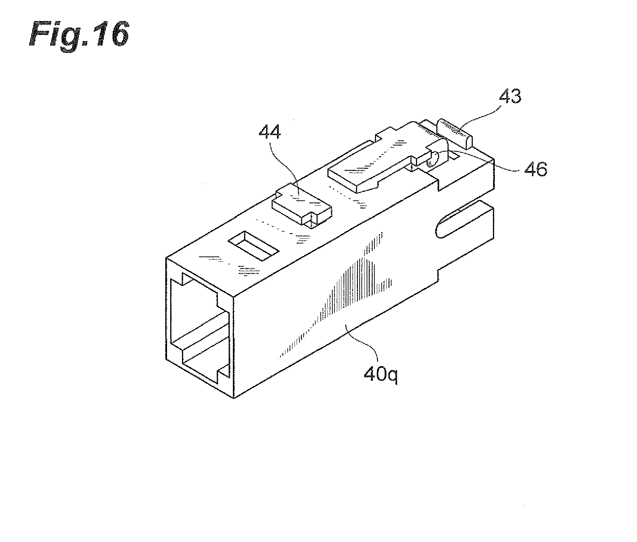

Means for rotatably attaching the output socket to the upper housing or the lower housing is not limited to the above-mentzoned hook part 42. For example, the output socket 40p including the cylindrical shaft member 45 protruding in the width direction may be used (refer to Figure 15), or the output socket 40q including the cylindrical shaft hole 46 formed in the width direction may be used (refer to Figure 16). When the output socket 40p is used, a shaft hole in which the shaft member 45 is inserted may be provided in an inner wall corresponding to a side surface of the housing, and when the output socket 40q is used, the shaft member to be inserted in the shaft hole 46 may be provided on the inner wall.

When the output socket is rotatably attached to the upper housing or the lower housing, fixing means for maintaining a state where the output socket is inclined to the housing may be provided in the splitter module (the housing box). In this case, since the inclined state of the output socket can be maintained, the optical connector can be attached and detached more easily.

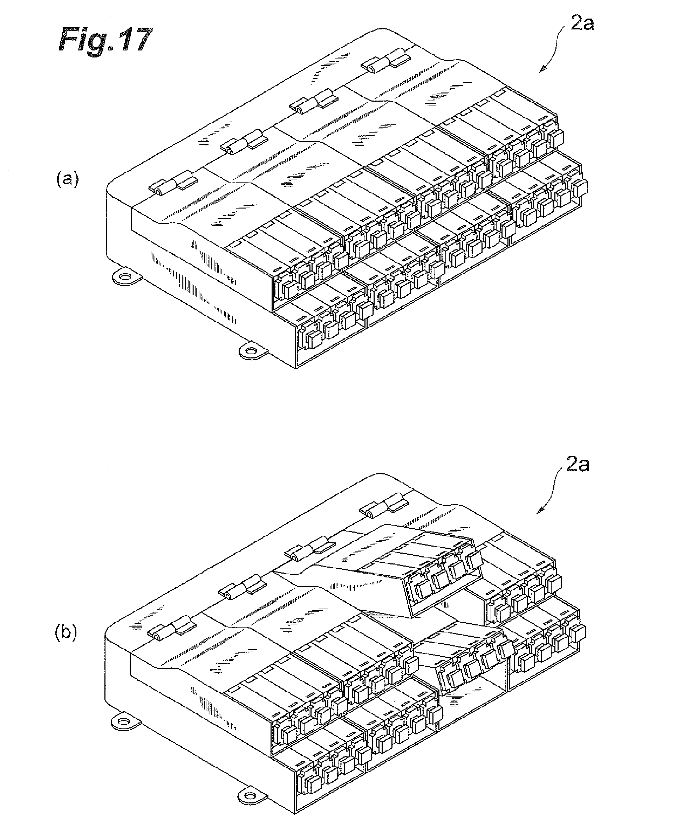

Although the four socket housing boxes 2 having the eight output sockets 40 housed therein, and a 32-splitting optical splitter S are used in the above-described embodiment, the number of the output sockets housed in the housing box, the number of housing boxes to be used, or a type of an optical splitter are not limited to this. For example, the splitter module may be configured by combining a housing box similar to the socket housing box 2 and an 8-splitting optical splitter. In addition, the splitter module may be configured by combining one housing box 2a (refer to Figure 17(a)) in which sixteen output sockets are aligned in the lower housing and the upper housing, respectively, and the 32-splitting optical splitter. In the housing box 2a, the upper housing is comprised of four housings that house the four output sockets, and each of the housings can be rotated independently (refer to Figure 17(b)).

In the above-described embodiment, although the plurality of output sockets 40 housed in the lower housing 10 are protruded anterior to the upper housing 20, it is arbitrary whether or not the output sockets 40 are protruded as described above. In addition, in the above-described embodiment, although the part of the top surface 10c of the lower housing 10 and the part of the top surface 20a of the upper housing 20 are opened, it is also arbitrary whether or not the top surfaces of the housings are opened.

In addition, in order to make smaller an installation area of a housing box, corners of a rear end of the housing box may be chamfered to make a curved surface. As a result of this, a possibility can be reduced that an optical fiber cord, an optical cable, etc. are caught on the corners of the housing box to cause disconnection.

Although the socket housing box 2 houses the optical sockets in the above-described embodiment, optical adapters may be housed instead of the optical sockets. For example, it is possible to apply the present invention to a splitter module (a housing box) that houses an optical adapter to fit in the SC connector etc.

### Preference Signs List

In Figures 1 to 8, 1 and 1a ... Splitter module, 10 ... Lower housing, 10c ... Top surface of lower housing, 13 ... Rod-like member, 20 ... Upper housing, 21 ... Hook, 30 ... Fixing part, 40, 40p, 40q ... Output socket (Optical socket), 41 ... Insertion opening, 42 ... Hook part, 43 ... Projecting part, 44 ... Claw part, 45 ... Shaft member, 46 ... Shaft hole, C1, C2 ... Optical fiber core, S ... Optical splitter.

In Figures 9 to 17, 1 ... Splitter module, 2, 2a ... Socket housing box, 10 ... Lower housing, 10c ... Top surface of lower housing, 12 ... Guide opening, 13 ... Rod-like member, 20 ... Upper housing, 21 ... Hook, 30 ... Fixing part, 40, 40p, 40q ... Output socket (Optical socket), 41 ... Insertion opening, 42 ... Hook part, 43 ... Projecting part, 44 ... Claw part, 45 ... Shaft member, 46 ... Shaft hole, C1, C2 ... Optical fiber core, S ... Optical splitter.

## Claims

1. A splitter module comprising:
an optical splitter that splits an input optical signal to output split optical signals;
a lower housing that houses the optical splitter, and a plurality of optical sockets or optical adapters having insertion openings formed at one end in which optical connectors are inserted, the optical sockets or optical adapters being connected to the optical splitter via an optical fiber core;
an upper housing that is provided on a top surface of the lower housing, and that houses a plurality of the optical sockets or the optical adapters; and
a fixing part attached to the lower housing, wherein
each of the optical sockets or each of the optical adapters is rotatably attached to the fixing part so that the insertion opening of each of the optical sockets or each of the optical adapters is close to or spaced apart from the fixing part.

2. The splitter module according to claim 1, wherein
a plurality of optical sockets or optical adapters housed in the lower housing are rotatably attached to the lower housing, and
the upper housing is rotatably attached to the lower housing.

3. The splitter module according to claim 2, wherein a plurality of optical sockets or optical adapters housed in the upper housing are rotatably attached to the upper housing.

4. The splitter module according to claim 1, wherein
a plurality of optical sockets or optical adapters housed in the lower housing are rotatably attached to the lower housing, and
a plurality of optical sockets or optical adapters housed in the upper housing are rotatably attached to the upper housing.

5. The splitter module according to any one of claims 1 to 4, wherein
a plurality of optical sockets or optical adapters housed in the lower housing are exposed when viewed from an upper side of the lower housing, and
a plurality of optical sockets or optical adapters housed in the upper housing are exposed when viewed from an upper side of the upper housing.

6. The splitter module according to any one of claims 1 to 5, wherein a plurality of optical sockets or optical adapters housed in the lower housing protrude more outwardly than the upper housing when viewed from the upper side of the upper housing.

7. A splitter module comprising:
an optical splitter that splits an input optical signal to output split optical signals; and
a housing box that houses a plurality of optical sockets or optical adapters that are connected to the optical splitter via an optical fiber core and that have insertion opening formed at one end in which optical connectors are inserted, the housing box having formed a guide opening for guiding the optical fiber core thereinside, and
the housing box comprises:
a lower housing that houses a plurality of the optical sockets or optical adapters;
an upper housing that is provided on a top surface of the lower housing, and that houses a plurality of the optical sockets or the optical adapters; and
a fixing part attached to the lower housing, and
each of the optical sockets or each of the optical adapters is rotatably attached to the fixing part so that the insertion opening of each of the optical sockets or each of the optical adapters is close to or spaced apart from the fixing part.

8. The splitter module according to claim 7, wherein
a plurality of optical sockets or optical adapters housed in the lower housing are rotatably attached to the lower housing, and
the upper housing is rotatably attached to the lower housing.

9. The splitter module according to claim 8, wherein a plurality of optical sockets or optical adapters housed in the upper housing are rotatably attached to the upper housing.

10. The splitter module according to claim 7, wherein
a plurality of optical sockets or optical adapters housed in the lower housing are rotatably attached to the lower housing, and
a plurality of optical sockets or optical adapters housed in the upper housing are rotatably attached to the upper housing.

11. The splitter module according to any one of claims 7 to 10, wherein
a plurality of optical sockets or optical adapters housed in the lower housing are exposed when viewed from an upper side of the lower housing, and
a plurality of optical sockets or optical adapters housed in the upper housing are exposed when viewed from an upper side of the upper housing.

12. The splitter module according to any one of claims 7 to 11, wherein a plurality of optical sockets or optical adapters housed in the lower housing protrude more outwardly than the upper housing when viewed from the upper side of the upper housing.
